# EUROPEAN PATENT APPLICATION

(11) **EP 4 242 842 A1**
(43) Date of publication of application: **13.09.2023**
(21) Application number: 21888559.8
(22) Date of filing: 03.11.2021
(51) Int. Cl.: G06F 9/48, G06F 9/52, G06F 9/50

(54) **THREAD PRIORITY ADJUSTING METHOD, TERMINAL, AND COMPUTER READABLE STORAGE MEDIUM**

(30) Priority: 09.11.2020 CN 202011238906
(71) Applicant: ZTE Corporation, Shenzhen, Guangdong 518057 (CN)
(72) Inventor: LIU, Hongxia, Shenzhen, Guangdong 518057 (CN); RUAN, Meisi, Shenzhen, Guangdong 518057 (CN)
(74) Representative: Petraz, Gilberto Luigi
(86) International application number: PCT/CN2021/128287
(87) International publication number: WO 2022/095862

(57) **Abstract**

The present disclosure provides a thread priority adjusting method, a terminal, and a computer readable storage medium. The method may include: monitoring a state of at least one thread; in a case where the at least one thread is detected to be in a preset blocked state, detecting a running states and an associated state of respective threads in the same process; and according to the running state and the associated state of the respective threads, adjusting the priority of one or at least two threads in the same process.

## Description

### CROSS-REFERENCE TO RELATED APPLICATIONS

The present application claims the priority of Chinese patent application CN202011238906.9, filed on November 09, 2020 and entitled "Thread priority adjusting method, terminal and computer-readable storage medium", which is incorporated herein by reference in its entirety.

### FIELD OF TECHNOLOGY

The present disclosure relates to, but not limited to, the field of terminals, and in particular, relates to, but not limited to, a thread priority adjusting method, a terminal and a computer-readable storage medium.

### BACKGROUND

For some terminal products, framework services thereof involve a plurality of threads for different functions, and different threads need to mutually coordinate the access to shared resources by a lock and transfer priority by the lock, which requires lock contention between the threads to realize priority transfer. The lock contention refers to that a plurality of threads must acquire the same lock, and when a current thread has acquired the lock, the other threads can only acquire the lock according to priority, resulting in not dynamically adjusting the priority of the threads and relatively poor system performance.

### SUMMARY

The present disclosure provides a thread priority adjusting method, a terminal and a computer-readable storage medium, so as to solve the technical problem in which a thread is executed according to a preset priority, resulting in poor system performance.

In order to solve the above technical problem, an embodiment of the present disclosure provides a thread priority adjusting method, and the method may include: monitoring a state of at least one thread; detecting a running state and an association state of respective threads in the same process in a case where the at least one thread is detected to be in a preset blocked state; and performing priority adjustment on one or at least two threads in the same process according to the running state and the association state of the respective threads.

An embodiment of the present disclosure further provides a terminal, and the terminal may include: a monitoring module, a detection module and an adjustment module. The monitoring module is configured to monitor a state of at least one thread. The detection module is configured to detect a running state and an association state of respective threads in the same process in a case where it is detected that the at least one thread is in a preset blocked state. The adjustment module is configured to perform priority adjustment on one or at least two threads in the same process according to the running state and the association state of the respective threads.

An embodiment of the present disclosure further provides a terminal, and the terminal may include: a processor, a memory and a communication bus. The communication bus is configured to realize connection and communication between the processor and the memory. The processor is configured to execute one or more computer programs stored in the memory, so as to implement steps of the above thread priority adjusting method.

An embodiment of the present disclosure further provides a computer storage medium. The computer-readable storage medium stores one or more programs, and the one or more programs may be executed by one or more processors, so as to implement steps of the above thread priority adjusting method.

The other features and corresponding beneficial effects of the present disclosure will be described and illustrated in the following parts of the description, and it should be understood that at least some of the beneficial effects are obvious from the content specified in the description of the present disclosure.

### BRIEF DESCRIPTION OF THE DRAWINGS

Fig. 1 is a basic flowchart of a thread priority adjusting method in an embodiment one of the present disclosure;
Fig. 2 is a detailed flowchart of a thread priority adjusting method in an embodiment two of the present disclosure;
Fig. 3 is a schematic diagram of a structure of a terminal in an embodiment three of the present disclosure;
Fig. 4 is a schematic diagram of a structure of a terminal in an embodiment four of the present disclosure;
Fig. 5 is a schematic diagram of a state of a thread in an embodiment four of the present disclosure; and
Fig. 6 is a schematic diagram of a structure of a terminal in embodiment five of the present disclosure.

### DETAILED DESCRIPTION OF THE EMBODIMENTS

In order to make the objectives, technical solutions and advantages of the present disclosure clearer, embodiments of the present disclosure are further illustrated in details below by combining the specific implementations with the accompanying drawings. It should be understood that the particular embodiments described herein are merely to illustrate the present disclosure and are not intended to limit the present disclosure.

### Embodiment one

In order to solve the technical problems in which a priority of threads is difficult to be adjusted when executed according to the priority, resulting in relatively poor system performance, etc., the present disclosure provides a thread priority adjusting method which will be illustrated below by combining the present embodiment.

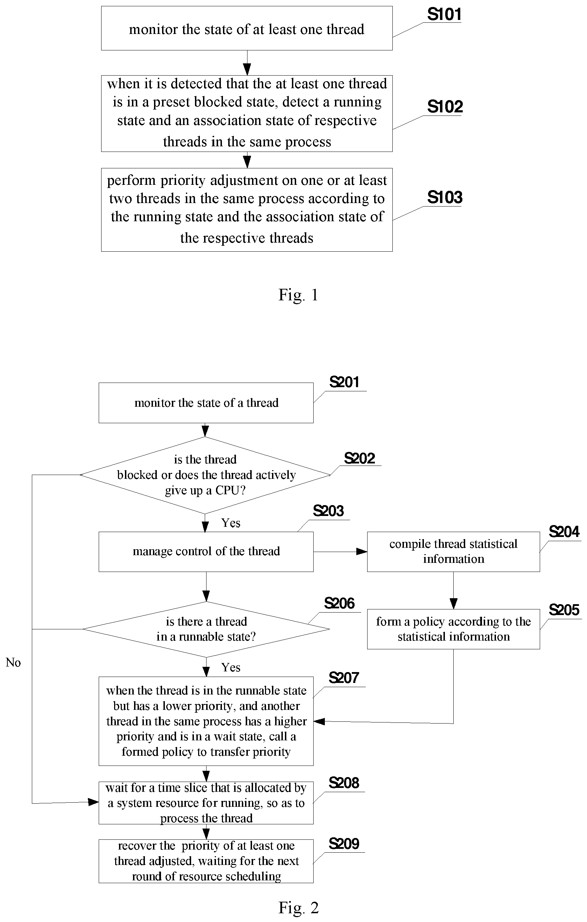

Referring to Fig. 1, Fig. 1 is a basic schematic flowchart of a thread priority adjusting method in an embodiment one of the present disclosure, and the method includes the following steps S101 to S103.

At S101, a state of at least one thread is monitored.

In some embodiments, the at least one thread may include: a thread which calls a process scheduling function and temporarily stops running due to the need to wait for a system resource; and/or a thread which executes a process scheduling function when there is an interrupted or abnormal process in a current instruction executed by a CPU and the priority of the interrupted or abnormal process in the current instruction is higher than the priority of a process of a next instruction to be executed by the CPU. For example, after the CPU executes the current instruction and before the CPU executes the next instruction, when it is detected that an interruption or anomaly occurs after the current instruction is executed, the priority of the interrupted or abnormal process is compared with the priority of the process of the next instruction. When the priority of the interrupted or abnormal process is higher than the priority of the process of the next instruction, an interrupt service routine is executed; and a thread of a process scheduling function is executed when returning to the interruption. The process scheduling function called may be schedule ().

For thread scheduling caused by an IO resource, an IO flag bit may be set before the process scheduling function schedule () is called, and then whether the switching of the state of the thread is caused by the IO resource may be determined based on the IO flag bit.

The thread may call a socket interface when using a network resource. Some flag bits may be added to the socket interface. Thus, when the state of the thread is switched, whether the occurrence of thread block is caused by the network resource may be determined.

In some embodiments, monitoring the state of the at least one thread may include: the at least one thread being in a wait state when the at least one thread is detected to execute a wait policy; or the at least one thread changing from the wait state to a runnable state when the at least one thread is detected to execute a sleep policy and a sleep time thereof exceeds a first preset duration; or the at least one thread changing from the wait state to the runnable state when the at least one thread is detected to execute a policy, which continues to execute a next thread after waiting for the completion of the calling and execution of the current thread, and a wait time thereof exceeds a second preset duration; or the at least one thread changing from the wait state to the runnable state when the at least one thread is detected to send a request for acquiring an input or output resource. The wait policy is a wait () method in which the execution of the current thread is made temporarily stop and an object lock flag is released. The sleep policy is a sleep () method in which the execution of the current thread is made temporarily stop for a period of time and the execution of other threads may continue, but the object lock is not released. The policy of continuing to execute a next thread after waiting for the completion of the calling and execution of the current thread is a join () method in which the execution of a thread that calls the method is made completed before the next thread, that is, a subsequent thread continues after the execution of the thread that calls the method is completed.

At S 102, when it is detected that the at least one thread is in a preset blocked state, a running state and an association state of respective threads in the same process are detected.

The preset blocked state in this step may include: the thread being blocked due to not acquiring a system resource or the thread actively giving up the CPU. The system resource includes at least one of the following: a network resource and an I/O resource. The system resource may further include a memory, a CPU resource, etc.

In the case where a synchronization lock is occupied by another thread when the at least one thread acquires the synchronization lock of an object, the at least one thread may be directly determined to be in the preset blocked state.

The association state associated with the respective threads may include: a priority order of the respective threads, or the priority order of the respective threads and mutual wakeup information of the respective threads.

At S103, priority adjustment is performed on one or at least two threads in the same process according to the running state and the association state of the respective threads.

In some embodiments, performing the priority adjustment on one or at least two threads in the same process according to the running state and the association state of the respective threads may include: determining the priority of the respective threads, and adjusting the priority of at least one of the respective threads according to the running state and the priority of the respective threads. Adjusting the priority of at least one of the respective threads according to the running state and the priority of the respective threads may include: when there are a first thread in the runnable state and a second thread in the wait state among the respective threads, determining the priority of the first thread and the priority of the second thread; and when the priority of the first thread is lower than that of the second thread, adjusting the priority of the first thread to be higher than that of the second thread.

The adjusting of the priority of at least one of the respective threads according to the running state and the priority of the respective threads may further include: when there are a third thread in the runnable state and a fourth thread in the wait state among the respective threads, determining the priority of the third thread and the priority of the fourth thread; and when the priority of the third thread is lower than that of the fourth thread and the third thread and the fourth thread wake up each other, adjusting the priority of the third thread to be higher than that of the fourth thread.

For example, statistical information is compiled for the respective threads in the same process, and according to the statistical information, whether there is a thread in the runnable state in the current process, which blocks a thread that has a priority higher than that of the thread in the runnable state, is determined. The statistical information compiled for the respective threads in the same process may include: the running state, a time slice and the priority of the respective threads, and the mutual wakeup information between the threads. If two threads frequently wake up each other, with one in the runnable state and the other in the wait state, the thread in the wait state is largely caused due to that the thread in the runnable state is not executed. The priority of a runnable thread is boosted to preferentially acquire a resource. In this way, whether there is a low-priority thread in the runnable state in the current process which blocks a high-priority thread may be determined according to the statistical information. If there is such a low-priority thread, the low-priority thread needs to be adjusted, so that the low-priority thread preferentially acquires a resource. The thread state, scheduling information, IO information, network information, etc., may be outputted through a node of a proc or sys file system outside of an operating system based on the statistical information, and an external application may generate an intelligent policy according to these information and input the same into the system, so as to make priority transfer more intelligent.

In some embodiments, after the priority adjustment is performed on one or at least two threads in the same process according to the running state and the association state of the respective threads, according to adjusted priority of the respective threads, time slices allocated by a system resource to the respective threads for running are waited for processing the respective threads, and the priority of the respective threads adjusted are recovered.

According to the embodiments of the present disclosure, the state of the at least one thread is monitored; when it is detected that the at least one thread is in a preset blocked state, a running state and an association state of the respective threads in the same process are detected; and priority adjustment is performed on one or at least two threads in the same process according to the running state and the association state of the respective threads. In this way, the priority of the threads is dynamically adjusted, thereby improving the system performance.

### Embodiment two

By the thread priority adjusting method of the present disclosure, dynamic adjustment of the priority of the threads can be realized, thereby improving the system performance. To facilitate comprehension, the thread priority adjusting method of the present disclosure will be illustrated below in view of an application scenario.

Fig. 2 is a detailed schematic flowchart of the thread priority adjusting method in an embodiment two of the present disclosure, and the thread priority adjusting method includes the following steps S201 to S209.

At S201, a state of a thread is monitored when the state of the thread is switched from a running state to a non-running state.

At S202, whether the thread is blocked due to not acquiring an IO resource and a network resource or the thread actively gives up the CPU, is determined.

There are three types of blocking manners.
1) wait blocking: a running thread executes the wait () method, and a virtual machine puts the thread into a "wait pool", and the thread cannot automatically wake up after the thread enters in this state, and can only be woken up by another thread calling the notify () method or notify ALL () method, and thus, this state needs to be determined.
2) synchronization blocking: when the running thread acquires a synchronization block of an object and if the synchronization lock is occupied by another thread, the virtual machine will put the thread into a "lock pool", which indicates that the blocking is caused by lock contention, and thus determination is not required.
3) other blocking: when the running thread executes the sleep () method or join () method, or sends an I/O request, the virtual machine will set the thread to the blocked state; and when the state of sleep () times out, the waited thread in join () terminates or times out, or I/O processing is completed, the thread changes to the runnable state again, and thus this state needs to be determined.

If the thread is blocked due to not acquiring the IO resource and the network resource, or the thread actively gives up the CPU, S203 is executed; or otherwise, S208 is executed.

At S203, control of the threads is managed to maintain the state of the respective threads in the same process.

After this step S203, S204 and S206 may be executed at the same time.

At S204, statistical information is compiled on information such as the running state, the time slice and the priority of the threads, and mutual wakeup information between the threads.

At S205, a policy is formed according to the statistical information.

If two threads are found to frequently wake up each other, with one in the runnable state and the other in the wait state, the thread in the wait state is largely caused due to not executing the thread in the runnable state. The priority of the runnable thread is booted to preferentially acquire a resource. In this way, whether there is a low-priority thread in the runnable state in the current process, which blocks a high-priority thread, may be determined according to the statistical information. If there is a low-priority thread in the runnable state in the current process, the low-priority thread needs to be adjusted, so that the low-priority thread preferentially acquires a resource. S207 is executed after completing execution of the policy formed.

At S206, whether there is a thread in the runnable state in the process is determined, and if so, S207 is executed.

At S207, the thread is in the running state but has a relatively low priority; and if another thread in the same process has a high priority and is in the wait state, a policy in a policy library is executed to perform priority transfer.

At S208, time slices that are allocated by a system resource to the threads for running the threads are waited for processing the threads.

At S209, the priority of the at least one thread adjusted is recovered, and a next round of resource scheduling is waited.

In the thread priority adjusting method provided in the embodiments of the present disclosure, statistical information is compiled on related information such as the state, the running time, the priority of the threads, the IO resource usage, and the network resource usage, etc., such that it can be determined which threads are associated with each other. If a thread is in the wait state due to system resources such as an IO resource and a network resource and another thread is in the runnable state (the thread in the runnable state is executable, but cannot be executed due to that its time slice is used up), it indicates that the thread in the runnable state is likely to cause another thread to be in the wait state since the thread in the runnable state does not obtain a time slice to run. Then, the priority of the thread in the wait state may be transferred to the runnable thread, so that the runnable thread has a time slice to be executed. In this way, resource release is accelerated, the performance of the system is improved, and the situation in which if a low-priority thread holds a resource lock and when the system is busy, the low-priority thread may block the execution of other key processes since the low-priority thread may not release a lock caused by not acquiring execution time due to the IO or CPU resource, can be avoided.

### Embodiment three

In order to solve the technical problems in which the priority of the threads is difficult to be adjusted when executed according to priority, resulting in relatively poor system performance, the present disclosure provides a terminal which will be illustrated below by combining the present embodiment.

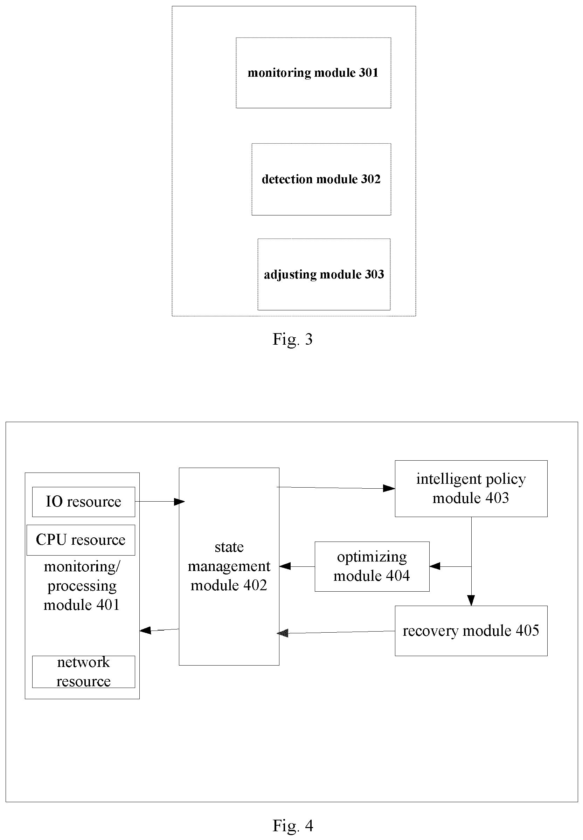

Referring to Fig. 3, Fig. 3 is a schematic diagram of a structure of a terminal in an embodiment three of the present disclosure. The terminal includes: a monitoring module 301, a detection module 302 and an adjustment module 303.

The monitoring module 301 is configured to monitor a state of at least one thread.

The detection module 302 is configured to detect a running state and an association state of respective threads in the same process when the monitoring module 301 has detected that the at least one thread is in a preset blocked state.

The adjustment module 303 is configured to perform priority adjustment on one or at least two threads in the same process according to the running state and the association state of the respective threads.

In some embodiments, the at least one thread may include: a thread which calls a process scheduling function and temporarily stops running due to the need to wait for a system resource; and/or a thread which executes a process scheduling function when there is an interrupted or abnormal process in a current instruction executed by a CPU and the priority of the interrupted or abnormal process in the current instruction is higher than the priority of a process of a next instruction to be executed by the CPU. For example, after the CPU executes the current instruction and before the CPU executes the next instruction, when it is detected that an interruption or anomaly occurs after the current instruction is executed, the priority of the interrupted or abnormal process is compared with the priority of the process of the next instruction; when the priority of the interrupted or abnormal process is higher than the priority of the process of the next instruction, an interrupt service routine is executed; and a thread of a process scheduling function is executed when returning the interruption . The process scheduling function called may be schedule ().

For thread scheduling caused by an IO resource, an IO flag bit may be set before the process scheduling function schedule () is called, and then whether the switching of the state of the thread is caused by the IO resource may be determined based on the IO flag bit.

The thread may call a socket interface when using a network resource. Some flag bits may be added to the socket interface, and thus, when the state of the thread is switched, whether the occurrence of thread block is caused by the network resource may be determined.

In some embodiments, monitoring the state of the at least one thread may include: the at least one thread being in a wait state when the at least one thread is detected to execute a wait policy; or the at least one thread changing from the wait state to a runnable state when the at least one thread is detected to execute a sleep policy and a sleep time thereof exceeds a first preset duration; or the at least one thread changing from the wait state to the runnable state when the at least one thread is detected to execute a policy, which continues to execute a next thread after waiting for the completion of the calling and execution of the current thread, and a wait time thereof exceeds a second preset duration; or the at least one thread changing from the wait state to the runnable state when the at least one thread is detected to send a request for acquiring an input or output resource. The wait policy is a wait () method in which the execution of the current thread is made temporarily stop and an object lock flag is released. The sleep policy is a sleep () method in which the execution of the current thread is made temporarily stop for a period of time and the execution of other threads may be continued, but the object lock is not released. The policy of continuing to execute a next thread after waiting for the completion of the calling and execution of the current thread is a join () method in which the execution of a thread that calls the method is made completed before the next thread, that is, a subsequent thread is continued after the execution of the thread that calls the method is completed.

The preset blocked state in the present embodiment may include: the thread being blocked since a system resource cannot be acquired, or the thread actively giving up the CPU. The system resource includes at least one of the following: a network resource and an I/O resource. The system resource may further include a memory, a CPU resource, etc.

In some embodiments, performing the priority adjustment on one or at least two threads in the same process according to the running state and the association state of the respective threads may include: determining the priority of the respective threads, and adjusting the priority of at least one of the respective threads according to the running state and the priority of the respective threads. Adjusting the priority of at least one of the respective threads according to the running state and the priority of the respective threads may include: when there are a first thread in the runnable state and a second thread in the wait state among the respective threads, determining the priority of the first thread and the priority of the second thread; and when the priority of the first thread is lower than that of the second thread, adjusting the priority of the first thread to be higher than that of the second thread.

The adjusting of the priority of at least one of the respective threads according to the running state and the priority of the respective threads may further include: when there are a third thread in the runnable state and a fourth thread in the wait state among the respective threads, determining the priority of the third thread and the priority of the fourth thread; and when the priority of the third thread is lower than that of the fourth thread and the third thread and the fourth thread wake up each other, adjusting the priority of the third thread to be higher than that of the fourth thread.

For example, statistical information is compiled for the respective threads of the same process, and according to the statistical information, whether there is a thread in the runnable state in the current process blocking a thread that has a priority higher than that of the thread in the runnable state is determined. The statistical information compiled for the respective threads of the same process includes: the running state, a time slice and the priority of the threads, and the mutual wakeup information between the threads. If two threads frequently wake up each other, with one in the runnable state and the other in the wait state, the thread in the wait state is largely caused due to that the thread in the runnable state is not executed. The priority of a runnable thread is boosted to preferentially acquire a resource. In this way, whether there is a low-priority thread in the runnable state in the current process which blocks a high-priority thread may be determined according to the statistical information. If there is such a low-priority thread, the low-priority thread needs to be adjusted, so that the low-priority thread preferentially acquires a resource. The thread state, scheduling information, IO information, network information, etc., may be outputted through a node of a proc or sys file system outside of an operating system based on the statistical information, and an external application may generate an intelligent policy according to these information and input the same into the system, so as to make priority transfer more intelligent.

In some embodiments, after the priority adjustment is performed on one or at least two threads in the same process according to the running state and the association state of the respective threads, the method may further include: according to the adjusted priority of the respective threads, time slices allocated by a system resource for running to the respective threads are waited for processing the respective threads, and the priority of the respective threads adjusted are recovered.

The terminal provided in the present disclosure is used, the terminal including a monitoring module, a detection module and an adjustment module. When the monitoring module detects that at least one thread is in a preset blocked state, the detection module detects a running state and an association state of the respective threads in the same process, and the adjustment module then performs priority adjustment on one or at least two threads in the same process according to the detected running state and association state of the respective threads in the same process. The priority of the respective threads is dynamically adjusted, thereby improving the system performance.

### Embodiment four

By the thread priority adjusting method of the present disclosure, dynamic adjustment of the priority of the threads can be realized, thereby improving the performance of the system. To facilitate comprehension, the terminal of the present disclosure will be illustrated below in view of an application scenario.

Fig. 4 is a schematic diagram of a structure of a terminal in an embodiment four of the present disclosure. The terminal includes: a monitoring/processing nodule 401, a state management module 402, an intelligent policy module 403, an optimizing module 404 and a recovery module 405.

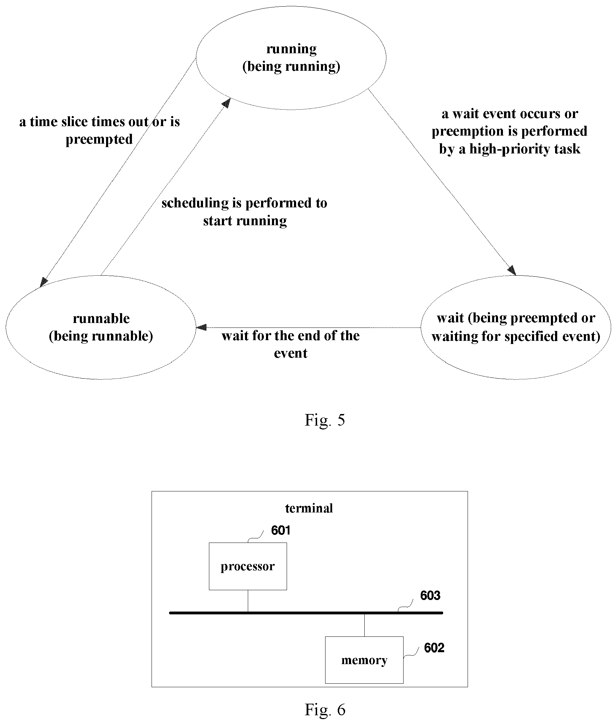

The monitoring/processing module 401 is configured to monitor a running state of a thread. According to different conditions of the thread during execution, at least three different running states may be defined, as shown in Fig. 5.

A thread in the running state may enter into a wait state due to the occurrence of a wait event. After the wait event ends, the thread in the wait state enters into a runnable state. Moreover, a scheduling policy of a processor causes the switching between the running state and the runnable state, which includes the following implementations.
1) A process scheduling function, i.e., schedule (), is actively called directly in a kernel. When the thread needs to wait for a resource and temporarily stops running, the state thereof is set to be a suspended state, actively request scheduling, and gives up a CPU; and the thread needs to be monitored.
2) In passive calling, after the CPU has executed the current instruction and before the CPU executes the next instruction, the CPU needs to determine whether an interruption or anomaly occurs after the current instruction is executed. If the interruption or anomaly occurs, the CPU compares the priority of the interruption with the priority of the current process. If the priority of a new task is higher, an interrupt service routine is executed, and when returning to the interruption, the thread scheduling function schedule () is executed, which needs to be monitored;
3) If the thread scheduling is caused by an IO resource, an IO flag bit may be set before the schedule function is called, and it is then possible to determine whether the switching of the state of the thread is caused by the IO resource.
4) The thread may call a socket interface when using a network resource, and some flag bits may be added to the socket interface. Thus, when the state of the thread is switched, it is possible to determine whether the thread block is caused by the network resource.

The state management module 402 is responsible for the current state of the respective threads in a thread pool, namely, wait state, runnable state, running state and block state. The intelligent policy module 403 is responsible for compiling statistics on the running state and time of the respective threads, and providing a corresponding solution. The optimizing module 404 dynamically adjusts the priority of the respective threads. The recovery module 405 recovers default running state of the respective threads to wait for resource scheduling.

According to the present disclosure, thread state information is collected in an early stage, and the priority of the threads are dynamically adjusted according to dynamic statistical information, such as the running state and time, such that resources are scheduled and released to the greatest extent. In this way, the time for waiting for a resource by an application program can be greatly reduced, and the influence due to the most significant factor that affects the performance of a mobile phone is reduced. Particularly for a mobile phone that has a smaller memory and more applications therein, the performance improvement effect is more obvious. Particularly for a mobile phone that has a relatively small memory, the occurrence of waiting for the IO resources can be greatly reduced, thereby improving the smoothness of the mobile phone. In addition to a communication terminal product, the present disclosure may also be used for a future vehicle-mounted product, computer, tablet computer, etc.

### Embodiment five

The present embodiment further provides a terminal. Referring to Fig. 6, the terminal includes: a processor 601, a memory 602 and a communication bus 603.

The communication bus 603 is configured to realize connection communication between the processor 601 and the memory 602.

The processor is configured to execute one or more computer programs that is stored in the memory 602, so as to implement at least one step of the thread priority adjusting method in the embodiment one or embodiment two.

The embodiments of the present disclosure further provide a computer-readable storage medium, the computer-readable storage medium including volatile or non-volatile, and removable or non-removable media implemented in any method or technology for storage of information such as computer-readable instructions, data structures, computer program modules or other data. The computer-readable storage medium includes, but not limited to a random access memory (RAM), a read-only memory (ROM), an electrically erasable programmable read only memory (EEPROM), a flash memory or other storage techniques, a compact disc read-only memory (CD-ROM), a digital versatile disc (DVD) or other optical disc memory, a cassette tape, tape or disc memory or other magnetic storage, or any other medium that can be used to store desired information and that can be accessed by a computer.

The computer-readable storage medium in the present embodiment may be used for storing one or more computer programs, and the one or more computer programs stored therein may be executed by a processor, so as to implement at least one step of the thread priority adjusting method in the embodiment one or embodiment two.

Hence, it should be understood by those of skills in the art that all or some of the steps in the method disclosed above, a system, and a function module/unit in an apparatus can be embodied as software (which can be realized by a computer program code that can be executed by a computer apparatus), firmware, hardware and a suitable combination thereof. In the hardware implementation, the division of the function modules/units mentioned in the above description does not necessarily correspond to the division of physical assemblies. For example, one physical assembly can have a plurality of functions, or one function or step can be executed by several physical assemblies in cooperation. Some assemblies or all the assemblies can be embodied as software that is executed by a processor, such as a central processing unit, a digital signal processor or a microprocessor, or be embodied as hardware, or be embodied as an integrated circuit, such as an application specific integrated circuit.

In addition, it is well known to those of ordinary skills in the art that a communication medium generally contains computer-readable instructions, data structures, computer program modules or other data in a modulated data signal such as a carrier or other transmission mechanisms, and can include any information transfer medium. Therefore, the disclosure is not limited to any specific combination of hardware and software.

The above content are further detailed descriptions made for the embodiments of the disclosure in conjunction with particular embodiments, and it should not be interpreted that the particular embodiments of the disclosure are only limited to these descriptions. For those of ordinary skills in the technical field to which the disclosure belongs, without departing from the concept of the disclosure, several simple deductions or replacements can be made, which should all be regarded as falling within the scope of protection of the disclosure.

## Claims

1. A thread priority adjusting method, comprising:
monitoring a state of at least one thread;
detecting a running state and an association state of respective threads in the same process in a case where the at least one thread is detected to be in a preset blocked state; and
performing priority adjustment on one or at least two threads in the same process according to the running state and the association state of the respective threads.

2. The thread priority adjusting method of claim 1, wherein the at least one thread comprises:
a thread which calls a process scheduling function and temporarily stops running due to waiting for a system resource; and/or
a thread which executes the process scheduling function in a case where there is an interrupted or abnormal process in a current instruction executed by a CPU and a priority of the interrupted or abnormal process in the current instruction is higher than a priority of a process of a next instruction to be executed by the CPU.

3. The thread priority adjusting method of claim 1, wherein the monitoring the state of the at least one thread comprises:
the at least one thread being in a wait state in a case where it is detected that the at least one thread executes a wait policy;
or
the at least one thread changing from the wait state to a runnable state in a case where it is detected that the at least one thread executes a sleep policy and a sleep time exceeds a first preset duration;
or
the at least one thread changing from the wait state to the runnable state in a case where it is detected that the at least one thread executes a policy of continuing to execute a next thread after waiting for completion of calling and execution of a current thread and a wait time exceeds a second preset duration;
or
the at least one thread changing from the wait state to the runnable state in a case where it is detected that the at least one thread has sent a request for acquiring an input or output resource.

4. The thread priority adjusting method of any one of claims 1 to 3, wherein the performing priority adjustment on the one or at least two threads in the same process according to the running state and the association state of the respective threads comprises:
determining priority of the respective threads; and
adjusting the priority of at least one of the respective threads according to the running state and the priority of the respective threads.

5. The thread priority adjusting method of claim 4, wherein the adjusting the priority of at least one of the respective threads according to the running state and the priority of the respective threads comprises:
in a case where there are a first thread in a runnable state and a second thread in a wait state among the respective threads,
determining a priority of the first thread and a priority of the second thread; and
adjusting the priority of the first thread to be higher than that of the second thread in a case where the priority of the first thread is lower than that of the second thread.

6. The thread priority adjusting method of claim 4, wherein the adjusting the priority of at least one of the respective threads according to the running state and the priority of the respective threads comprises:
determining a priority of a third thread and a priority of a fourth thread in a case where there are the third thread in a runnable state and the fourth thread in a wait state among the respective threads; and
adjusting the priority of the third thread to be higher than that of the fourth thread in a case where the priority of the third thread is lower than that of the fourth thread and the third thread and the fourth thread wake up each other.

7. The thread priority adjusting method of any one of claims 1 to 3, wherein after the performing priority adjustment on the one or at least two threads in the same process according to the running state and the association state of the respective threads, the thread priority adjusting method further comprises:
waiting for time slices allocated by a system resource to the respective threads for running, so as to process the respective threads according to the priority of the respective threads adjusted; and
recovering the priority of the respective threads adjusted.

8. A terminal, comprising:
a monitoring module configured to monitor a state of at least one thread;
a detection module configured to detect a running state and an association state of respective threads in the same process in a case where it is detected that the at least one thread is in a preset blocked state; and
an adjustment module configured to perform priority adjustment on one or at least two threads in the same process according to the running state and the association state of the respective threads.

9. A terminal, comprising:
a processor;
a memory; and
a communication bus configured to realize connection and communication between the processor and the memory,
wherein the processor is configured to execute one or more computer programs stored in the memory, so as to implement steps of the thread priority adjusting method of any one of claims 1 to 7.

10. A computer-readable storage medium, wherein the computer-readable storage medium stores one or more computer programs, and the one or more programs are executed by one or more processors, so as to implement steps of the thread priority adjusting method of any one of claims 1 to 7.
